# EUROPEAN PATENT APPLICATION

(11) **EP 3 112 404 A1**
(43) Date of publication of application: **04.01.2017**
(21) Application number: 15755469.2
(22) Date of filing: 26.01.2015
(51) Int. Cl.: C08J 9/00, G10K 9/22, H04R 1/00

(54) **METHOD FOR MANUFACTURING WATERPROOF SOUND-TRANSMITTING FILM, WATERPROOF SOUND-TRANSMITTING FILM, AND ELECTRONIC DEVICE**

(30) Priority: 26.02.2014 JP 2014035032
(71) Applicant: Nitto Denko Corporation, Ibaraki-shi, Osaka 567-8680 (JP)
(72) Inventor: MORI, Masaaki, Ibaraki-shi Osaka 567-8680 (JP); TACHIBANA, Toshimitsu, Ibaraki-shi Osaka 567-8680 (JP)
(74) Representative: Intès, Didier Gérard André
(86) International application number: PCT/JP2015/000331
(87) International publication number: WO 2015/129156

(57) **Abstract**

A waterproof sound-permeable membrane (10) includes a polytetrafluoroethylene (PTFE) membrane (20). The PTFE membrane (20) is obtained by stretching a PTFE sheet so as to obtain a porous PTFE membrane having a porous structure including a plurality of fibrils and pores between the plurality of fibrils and then applying a pressure to only a region of one principal surface of the porous PTFE membrane in a thickness direction of the porous PTFE membrane or by applying a greater pressure to a region of one principal surface of the porous PTFE membrane than to a remaining region of the one principal surface other than the region to which the greater pressure is applied, in the thickness direction of the porous PTFE membrane. The PTFE membrane (20) has a low-density portion (21) having the porous structure and a high-density portion (22) having a lower porosity than the low-density portion (21).

## Description

### TECHNICAL FIELD

The present invention relates to a method for producing a waterproof sound-permeable membrane, a waterproof sound-permeable membrane, and an electronic device.

### BACKGROUND ART

Electronic devices such as mobile phones, laptop computers, smartphones, portable audio players, and portable game machines have an audio function. Such an electronic device having an audio function includes a housing, inside which is placed a sound emitting part such as a speaker or buzzer and/or a sound receiving part such as a microphone. The housing is typically provided with an opening for directing sound from the sound emitting part and/or directing sound to the sound receiving part.

It is common practice to cover the opening of the housing using a waterproof sound-permeable membrane in order to prevent foreign matters such as water drops from entering the housing of the electronic device. Known examples of the waterproof sound-permeable membrane include porous polytetrafluoroethylene (PTFE) membranes (see Patent Literatures 1 to 3). A porous PTFE membrane is produced by stretching a shaped product containing a fine PTFE powder and a liquid lubricant so as to form pores in the shaped product.

### CITATION LIST

### Patent Literature

Patent Literature 1: JP 2003-53872 A
Patent Literature 2: JP 2004-83811 A
Patent Literature 3: JP 2003-503991 T

### SUMMARY OF INVENTION

### Technical Problem

There is an increasing demand for enhancement of waterproofness of waterproof sound-permeable membranes. The use of an imperforate membrane as a waterproof sound-permeable membrane can ensure good waterproofness. Imperforate membranes, however, have poorer sound permeability than porous membranes. It is challenging to provide an improvement on waterproof sound-permeable membranes so as to achieve enhanced waterproofness without significant loss in sound permeability.

In view of these circumstances, the present invention aims to provide a method for producing a waterproof sound-permeable membrane suitable for improving waterproofness and ensuring good sound permeability. The present invention also aims to provide a waterproof sound-permeable membrane suitable for improving waterproofness and ensuring good sound permeability and an electronic device including this waterproof sound-permeable membrane.

### Solution to Problem

The present invention provides a method for producing a waterproof sound-permeable membrane including a PTFE membrane, the method including:
stretching a PTFE sheet so as to obtain a porous PTFE membrane having a porous structure including a plurality of fibrils and pores between the plurality of fibrils; and
applying a pressure to only a region of one principal surface of the porous PTFE membrane in a thickness direction of the porous PTFE membrane or applying a greater pressure to a region of one principal surface of the porous PTFE membrane than to a remaining region of the one principal surface other than the region to which the greater pressure is applied, in the thickness direction of the porous PTFE membrane, so as to form a PTFE membrane including a low-density portion having the porous structure and a high-density portion having a lower porosity than the low-density portion.

Another aspect of the present invention provides a waterproof sound-permeable membrane including a PTFE membrane, wherein
the PTFE membrane includes:
a low-density portion having a plurality of fibrils and pores between the plurality of fibrils and exposed on one principal surface of the PTFE membrane; and
a high-density portion having a lower porosity than the low-density portion and exposed on the one principal surface.

Still another aspect of the present invention provides an electronic device including:
a sound emitting part and/or a sound receiving part;
a housing containing the sound emitting part and/or the sound receiving part and provided with an opening for directing sound from the sound emitting part and/or directing sound to the sound receiving part; and
the waterproof sound-permeable membrane of the present invention, the waterproof sound-permeable membrane being joined to the housing so as to cover the opening.

### Advantageous Effects of Invention

According to the present invention, it is possible to provide a waterproof sound-permeable membrane suitable for improving waterproofness and ensuring good sound permeability.

### BRIEF DESCRIPTION OF DRAWINGS

FIG. 1 is a cross-sectional view showing an example of the waterproof sound-permeable membrane of the present invention.
FIG. 2 is a perspective view of the waterproof sound-permeable membrane shown in FIG. 1.
FIG. 3 is a cross-sectional view showing a modification of the waterproof sound-permeable membrane shown in FIG. 1.
FIG. 4 is a diagram illustrating the procedures for producing the waterproof sound-permeable membrane shown in FIG. 1.
FIG. 5 is a cross-sectional view showing a modification of the waterproof sound-permeable membrane of the present invention.
FIG. 6 is a front view showing a mobile phone as an example of the electronic device of the present invention.
FIG. 7 is a back view of the mobile phone shown in FIG. 6.
FIG. 8 is a diagram illustrating the procedures for producing an evaluation system for acoustic characteristics.
FIG. 9 is an enlarged cross-sectional view of an evaluation sample.
FIG. 10 is a graph showing the acoustic characteristics of evaluation samples of Examples and Comparative Examples.
FIG. 11 is a scanning electron microscope (SEM) image of the top surface of a PTFE membrane of Example.
FIG. 12 is a SEM image of the under surface of the PTFE membrane of Example.
FIG. 13 is an enlarged SEM image of a region including a low-density portion in the top surface of the PTFE membrane of Example.
FIG. 14 is an enlarged SEM image of a region including a high-density portion in the top surface of the PTFE membrane of Example.

### DESCRIPTION OF EMBODIMENTS

Hereinafter, embodiments of the present invention will be described with reference to the accompanying drawings. The following description is only illustrative of embodiments of the present invention and is not intended to limit the present invention.

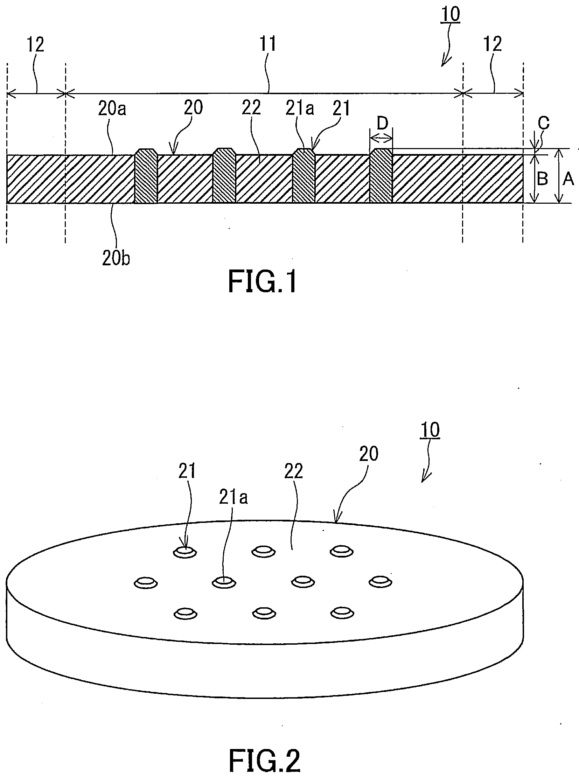

A waterproof sound-permeable membrane of the present embodiment will be described using FIG. 1 and FIG. 2. The waterproof sound-permeable membrane 10 has a sound-permeation region 11 and an edge region 12 surrounding the sound-permeation region 11. The sound-permeation region 11 is a region that permits passage of sound. The edge region 12 serves as a portion for attachment to a housing. For example, the edge region 12 is welded to the wall of a housing, or an adhesive layer is joined to the edge region 12.

In the waterproof sound-permeable membrane 10 of the present embodiment, both the sound-permeation region 11 and the edge region 12 consist only of a PTFE membrane 20.

A top surface 20a of the PTFE membrane 20 and an under surface 20b thereof opposite to the top surface 20a are in contact with the ambient atmosphere in the sound-permeation region 11. The embodiment in which the top surface 20a and the under surface 20b, that is, both principal surfaces are in contact with the ambient atmosphere is suitable for achieving good sound permeability.

The PTFE membrane 20 can be obtained by stretching a PTFE sheet so as to obtain a porous PTFE membrane and then applying a greater pressure to a region of the top surface of the porous PTFE membrane than to the remaining region of the top surface other than the region to which the greater pressure is applied, in the thickness direction of the porous PTFE membrane. The porous PTFE membrane obtained by stretching a PTFE sheet has a characteristic porous structure including a plurality of fibrils and pores between the plurality of fibrils. The PTFE membrane 20 has a low-density portion 21 still having the characteristics of this porous structure and a high-density portion 22 that has been compressed to have a lower porosity than the low-density portion 21. The porous structure may include not only fibrils and pores between the fibrils but also nodes connecting the fibrils. The low-density portion 21 and the high-density portion 22 are both exposed on the top surface 20a and the under surface 20b of the PTFE membrane 20. The high-density portion 22 has a higher density and a lower porosity than the low-density portion 21. Whether or not the high-density portion 22 has a higher density and a lower porosity than the low-density portion 21 can be determined by observing the top surface 20a or the under surface 20b of the PTFE membrane 20 using a SEM.

In the PTFE membrane 20, the low-density portions 21 are formed separately from one another within the high-density portion 22. When the top surface 20a or the under surface 20b is viewed vertically, the low-density portions 21 have substantially the same shape. They have a substantially circular shape. The low-density portions 21 are disposed only in the sound-permeation region 11. The low-density portions 21 may have shapes such as rectangles and ovals. The low density portions 21 may be disposed in both the sound-permeation region 11 and the edge region 12.

On the top surface 20a of the PTFE membrane 20, the low-density portions 21 each have a protrusion 21a protruding above the high-density portion 22. On the under surface 20b of the PTFE membrane 20, the low-density portions 21 and the high-density portion form a flat under surface. Therefore, the PTFE membrane 20 is thicker in the low-density portions 21 than in the high-density portion 22.

The high-density portion 22 is formed by applying a greater pressure to a region of the top surface of the porous PTFE membrane than to the remaining region corresponding to the low-density portions 21. The high-density portion 22 has no through hole penetrating through the PTFE membrane 20 from its top surface 20a to its under surface 20b because the fibrils and pores in the porous PTFE membrane are crushed. That is, in the high-density portion 22, the PTFE membrane 20 has no gas permeability in its thickness direction. However, the high-density portion 22 may have gas permeability in a region between the principal surfaces.

The low-density portions 21 are formed by applying no pressure to the corresponding region of the top surface of the porous PTFE membrane or by applying a smaller pressure to the corresponding region of the top surface of the porous PTFE membrane than to the region corresponding to the high-density portion 22. In the low-density portions 21, the PTFE membrane 20 has gas permeability in its thickness direction. This gas permeability is ensured by the pores between the fibrils penetrating through the PTFE membrane 20 from its top surface 20a to its under surface 20b. Thus, at least the presence of the low-density portions 21 allows the PTFE membrane 20 to have gas permeability between one principal surface (top surface 20a) and the other principal surface (under surface 20b) opposite to the one principal surface.

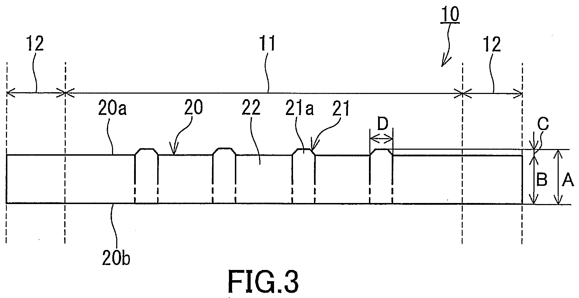

There may be a case where, in the under surface 20b of the PTFE membrane 20, the boundaries between the low-density portions 21 and the high-density portion 22 are poorly defined, as shown in FIG. 3. Even in this embodiment, the low-density portions 21 and the high-density portion 22 are exposed on the top surface 20a in such a manner that the low- and high-density portions can be definitely identified. The pressure applied to the high-density portion 22 is distributed more widely to the low-density portions 21 with increasing depth from the top surface 20a toward the under surface 20b, and as a result, the above-mentioned structure is formed.

Referring back to FIG. 1, the thickness A of the low-density portion 21 is, for example, 1.1 µm or more and 20.0 µm or less, and the thickness B of the high-density portion 22 is, for example, 1.0 µm or more and 19.9 µm or less. The height C of the protrusion 21a of the low-density portion 21 is, for example, 0.1 µm or more and 5.0 µm or less. The height C corresponds to the difference obtained by subtracting the thickness B from the thickness A. The outer diameter D of the protrusion 21a of the low-density portion 21 is, for example, 0.1 µm or more and 20.0 µm or less. In the principal surface (top surface 20a) of the PTFE membrane 20, the ratio of the area of the high-density portion 22 to the area (total area) of the low-density portions 21 is, for example, 40:60 to 99:1, and preferably 60:40 to 95:5.

An example of the method for producing the PTFE membrane 20 is described below.

First, a mixture containing a PTFE fine powder and a forming aid (liquid lubricant) is well kneaded to prepare a paste for use in extrusion molding. Next, the paste is preformed and then formed into a sheet or a rod by a well-known extrusion process to obtain a sheet- or rod-shaped product. Then, the sheet- or rod-shaped product is rolled to obtain a strip-shaped PTFE sheet. Next, the PTFE sheet obtained by rolling is dried in a drying oven. The forming aid in the PTFE sheet is evaporated during the drying process, and thus the content of the forming aid therein is sufficiently reduced. Next, the dried PTFE sheet is stretched in the longitudinal direction (MD) and in the transverse direction (TD) perpendicular to the longitudinal direction, respectively. The PTFE sheet thus biaxially stretched may be sintered at a temperature equal to or higher than the melting point of PTFE. A porous PTFE membrane is thus obtained.

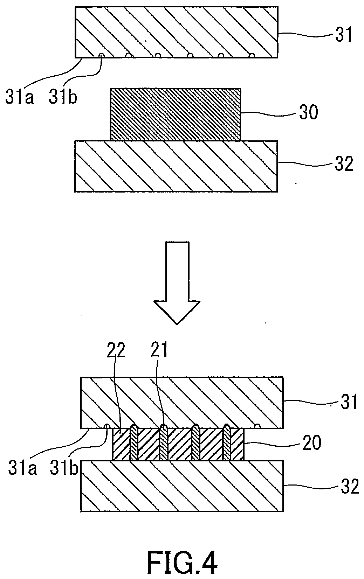

Next, a heat press machine is used to apply a pressure to a region of the top surface of the porous PTFE membrane thus obtained. As shown in FIG. 4, the heat press machine has an upper part (pressing member) 31 and a lower part 32. The upper part 31 has a pressing surface including a flat reference surface 31a and a plurality of recesses 31b formed within the reference surface 31a. The lower part 32 has a flat surface disposed to face the pressing surface of the upper part 31. The porous PTFE membrane 30 is placed on the flat surface of the lower part 32 and then the pressing surface of the upper part 31 is pressed against the top surface of the porous PTFE membrane 30. A region of the top surface of the porous PTFE membrane 30 is pressed by the reference surface 31a with a strong pressing force, and thus the pressed region of the porous PTFE membrane 30 is formed into the high-density portion 22. The remaining region of the top surface of the porous PTFE membrane 30 is pressed by the plurality of recesses 31b with a weaker pressing force than the force applied to the region corresponding to the high-density portion 22, and thus the low-density portions 21 are formed. The low-density portions 21 each have the protrusion 21a protruding above the high-density portion 22.

In the case where the recesses 31b are sufficiently deep, no pressure is applied to the region corresponding to the low-density portions 21 but a pressure is applied only to the region corresponding to the high-density portion 22. The pressing member 31 may have through holes instead of the recesses 31b. The pressing member 31 only need to have depressed portions serving as recesses or through holes.

The apparatus for forming the low-density portions 21 and the high-density portion 22 in the top surface of the PTFE membrane 20 is not limited to a heat press machine, and it may be a thermal head pressing machine or a heat rolling machine.

The PTFE membrane has an average pore diameter of, for example, 0.4 µm or more and 0.8 µm or less as measured according to American Society for Testing and Materials (ASTM) F316-86. The PTFE membrane has a porosity of, for example, 5% or more and 40% or less. In order to ensure better waterproofness, the average pore diameter and the porosity are preferably smaller (most preferably zero). However, it is preferable to adjust the average pore diameter and the porosity in the above ranges to obtain a good balance with sound permeability.

The thickness of the PTFE membrane is preferably 1 µm or more and 8 µm or less and more preferably 1 µm or more and 7.5 µm or less, in order to achieve higher levels of both sound permeability and waterproofness.

An exemplary measure of the waterproofness is water entry pressure. For example, it is preferable that the water entry pressure of the PTFE membrane be 500 kPa or more, as measured using a water penetration test apparatus (for high hydraulic pressure method) specified in Japanese Industrial Standards (JIS) L 1092: 2009, with a stainless steel mesh (having an opening size of 2 mm) being placed on a surface of the PTFE membrane opposite to that subjected to pressure so as to reduce the deformation of the PTFE membrane.

An exemplary measure of the sound permeability is insertion loss for 1,000 Hz sound. The insertion loss of the waterproof sound-permeable membrane for 1000 Hz sound is preferably 3 dB or less and more preferably 2 dB or less. Another exemplary measure of the sound permeability is insertion loss for sound in a predetermined frequency range. The insertion loss of the waterproof sound-permeable membrane for 100 to 5,000 Hz sound is preferably 3 dB or less and more preferably 2 dB or less. However, having too small an insertion loss is likely to lead to a failure to ensure good waterproofness. In view of this, the insertion loss of the waterproof sound-permeable membrane for 1,000 Hz sound may be 1 dB or more. Similarly, the insertion loss of the waterproof sound-permeable membrane for 100 to 5,000 Hz sound may be 1 dB or more. The details of the method for measuring the insertion loss are described in Examples below.

An exemplary measure of the gas permeability is a value determined by B method (Gurley method) of gas permeability measurement specified in JIS L 1096. The through-thickness gas permeability of the PTFE membrane, as expressed by such a value, is 3 to 1,000 seconds/100 mL, for example.

The PTFE membrane may be colored using a colorant such as a dye or a pigment. The colorant is preferably carbon black.

The PTFE membrane may be subjected to liquid-repellent treatment. The liquid-repellent treatment may be accomplished using a liquid-repellent agent containing a polymer having a perfluoroalkyl group.

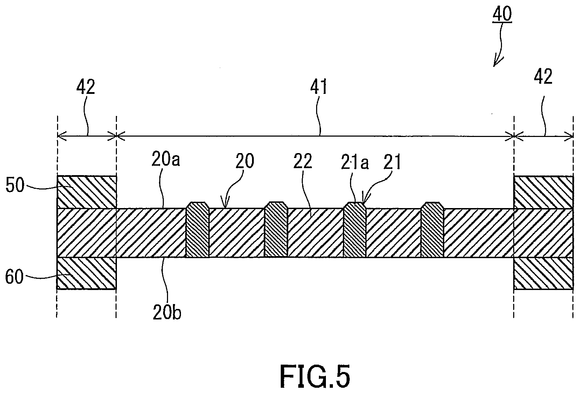

The waterproof sound-permeable membrane may include a reinforcing member and/or an adhesive layer. A waterproof sound-permeable membrane 40 shown in FIG. 5 includes an edge region 42 surrounding a sound-permeation region 41 and includes, in the edge region 42, a reinforcing member 50 secured to one surface of the PTFE membrane 20 and an adhesive layer 60 secured to the other surface of the PTFE membrane 20 away from the reinforcing member 50. The inclusion of the reinforcing member 50 reinforces the waterproof sound-permeable membrane 40 and allows easy handling of the waterproof sound-permeable membrane 40. Additionally, the reinforcing member 50 can function as a grip portion, which allows easy attachment of the waterproof sound-permeable membrane 40 to the housing. The reinforcing member 50 can also function as a portion for attachment, for example, to a microphone. Direct or indirect attachment of a microphone to the reinforcing member 50 will prevent interference between the sound-permeation region 41 and the microphone. Furthermore, the inclusion of the adhesive layer 60 can facilitate the attachment of the waterproof sound-permeable membrane 40 to the housing. The reinforcing member 50 and the adhesive layer 60 have a ring shape. Instead of the reinforcing member 50, an adhesive layer may be disposed. In this case, a pair of adhesive layers sandwiches the PTFE member 20 in the edge region 42.

The reinforcing member 50 can be formed of, for example, a resin, a metal, or a composite thereof. The PTFE membrane 20 and the reinforcing member 50 can be joined together, for example, by heat welding, ultrasonic welding, bonding with an adhesive, or bonding with a double-faced adhesive tape. The adhesive layer 60 may consist only of an adhesive or may be a double-faced adhesive tape.

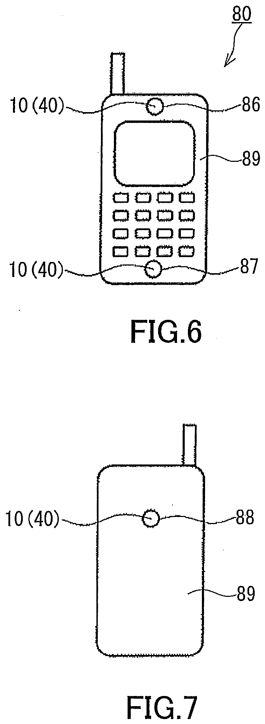

FIG. 6 and FIG. 7 show an example of the electronic device of the present invention that includes the waterproof sound-permeable membrane 10 (which may be replaced by the waterproof sound-permeable membrane 40). The electronic device shown in FIG. 6 and FIG. 7 is a mobile phone 80. A housing 89 of the mobile phone 80 is provided with openings for sound emitting and receiving parts such as a speaker 86, a microphone 87, and a buzzer 88. The waterproof sound-permeable membranes 10 are attached inside the housing 89 so as to cover these openings. In this example, the waterproof sound-permeable membranes 10 serve to prevent entry of water or dust into the housing 89 and protect the sound emitting and receiving parts.

The waterproof sound-permeable membrane 10 can be used in various electronic devices having an audio function, such as laptop computers, smartphones, portable audio players, and portable game machines. In summary, the electronic device of the present embodiment includes: a sound emitting part and/or a sound receiving part; a housing containing the sound emitting part and/or the sound receiving part and provided with an opening for directing sound from the sound emitting part and/or directing sound to the sound receiving part; and a waterproof sound-permeable membrane joined to the housing so as to cover the opening.

### EXAMPLES

The present invention will be described in detail by way of Examples. It should be noted that Examples given below are only illustrative of the present invention and do not limit the present invention. Methods for evaluating PTFE membranes according to Examples and Comparative Examples will first be described.

### [Average pore diameter]

The average pore diameter was measured according to ASTM F316-86. To be specific, the measurement of the average pore diameter was carried out using a commercially-available measurement apparatus (Perm-Prometer manufactured by Porous Material, Inc.) capable of automatic measurement complying with the ASTM standard.

### [Thickness]

Portions of each of the PTFE membranes of Examples and Comparative Examples were punched out with a 48-mm-diameter punch to obtain 10 punched-out pieces, which were then stacked together. The total thickness of these 10 pieces was measured using a micrometer and then divided by 10. Thus, the thickness of the PTFE membrane was obtained.

### [Porosity]

The bulk density of each PTFE membrane was determined from its volume and weight, and its porosity was calculated by the following formula on the assumption that the membrane had a true density of 2.18 g/cm³: Porosity = {1-(weight [g]/(thickness [cm] × area [cm²] × true density [2.18 g/cm³]))} × 100 (%).

### [Water entry pressure]

The water entry pressure of each PTFE membrane was measured using a water penetration test apparatus (for high hydraulic pressure method) specified in JIS L 1092: 2009. When a waterproof sound-permeable membrane as a test specimen has an area specified in this standard, the waterproof sound-permeable membrane undergoes significant deformation. In the measurement of the water entry pressure of each PTFE membrane, a stainless steel mesh (having an opening size of 2 mm) was placed on the surface of the PTFE membrane opposite to that subjected to pressure so as to reduce the deformation of the PTFE membrane.

### [Gas permeability]

The gas permeability of each PTFE membrane was evaluated according to B method (Gurley method) of gas permeability measurement specified in JIS L 1096.

### [Acoustic characteristics (insertion loss)]

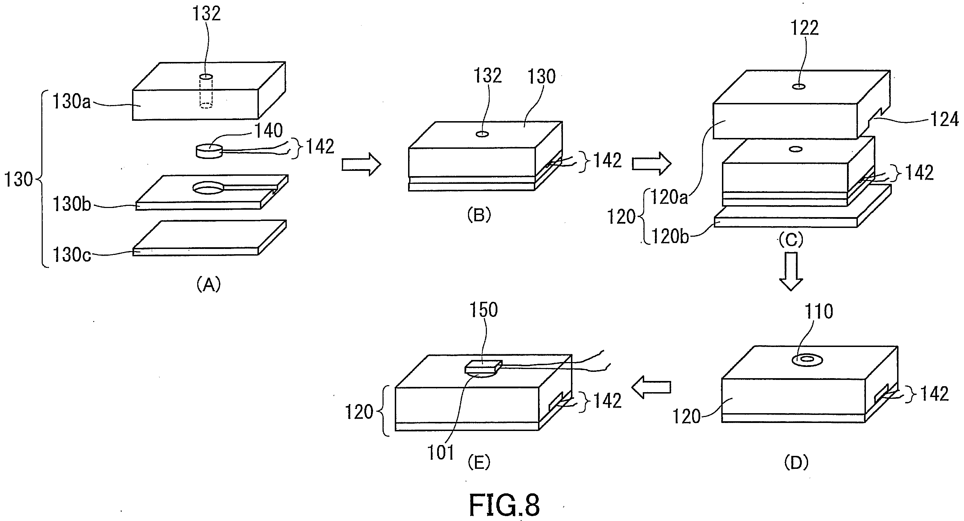

The acoustic characteristics of the PTFE membranes of Examples and Comparative Examples were evaluated in the manner described hereinafter. First, a system for evaluation was constructed as shown in FIG. 8. To begin with, a speaker 140 (SCG-16A manufactured by STAR MICRONICS CO., LTD.) connected to a speaker cable 142, and a filling member 130 made of urethane sponge, were prepared (FIG. 8(A)). The filling member 130 was constructed of a part 130a having a sound hole 132 with a diameter of 5 mm; a part 130c designed to serve as the bottom of the filling member 130; and a part 130b having a slot for accommodating the speaker 140 and the speaker cable 142 and designed to be placed between the part 130a and the part 130c. Then, the filling member 130 was assembled, with the speaker 140 and the speaker cable 142 being placed in the slot of the part 130b (FIG. 8 (B)). Next, a simulant housing 120 made of polystyrene was prepared (FIG. 8 (C)). The simulant housing 120 was constructed of: a part 120a having a sound hole 122 with a diameter of 2 mm and a cut 124; and a part 120b designed to serve as the bottom of the simulant housing 120. Next, the simulant housing 120 was assembled in such a manner that the speaker 140, the speaker cable 142, and the filling member 130 were placed inside the simulant housing 120 and that the speaker cable 142 was led to the outside of the simulant housing 120 through the cut 124 (FIG. 8 (D)). The simulant housing 120 assembled had outer dimensions of 60 mm × 50 mm × 28 mm. Then, the opening of the cut 124 was closed with putty.

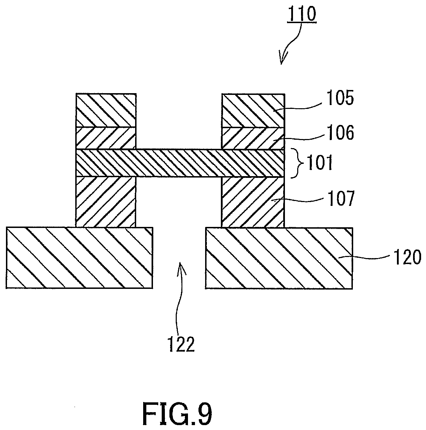

Next, an evaluation sample 110 was attached to the outer surface of the simulant housing 120 so as to cover the sound hole 122 (FIG. 9 and FIG. 8(D)). The evaluation sample 110 was a stack of a 0.20-mm-thick double-faced adhesive tape 107 (No. 57120B manufactured by Nitto Denko Corporation), a PTFE membrane 101 of Example or Comparative Example (PTFE membrane E1, C1, C2, or C3), a 0.03-mm-thick double-faced adhesive tape 106 (No. 5603 manufactured by Nitto Denko Corporation), and a 0.1-mm-thick PET film 105 which were arranged in this order. The double-faced adhesive tape 107 includes a base of polyethylene foam and acrylic adhesives placed on both sides of the base. The double-faced adhesive tape 106 includes a base of PET and acrylic adhesives placed on both sides of the base. The double-faced adhesive tape 107, the double-faced adhesive tape 106, and the PET film 105 were each a punched-out piece having an inner diameter of 2.5 mm and an outer diameter of 5.8 mm. The PTFE membrane 101 was a punched-out piece having an outer diameter of 5.8 mm.

Next, a microphone 150 (SPM 0405HD4H-WB manufactured by Knowles Acoustics) was placed above the PTFE membrane 101 so as to cover the PTFE membrane 101 (FIG. 8 (E)). The speaker cable 142 and the microphone 150 were connected to an acoustic evaluation apparatus (Multi-analyzer System 3560-B-030 manufactured by B&K Sound & Vibration Measurement A/S). The distance between the speaker 140 and the microphone 150 was 21 mm.

Under the above conditions, a test signal input to the speaker 140 from the acoustic evaluation apparatus and a signal received by the microphone 150 were sampled to determine the amount of signal attenuation A. Additionally, the PTFE membrane 101 was deliberately broken to form a 2.5-mm-diameter through hole, and the amount of signal attenuation B (sound pressure level in a blank state) was determined in the same manner as the amount of attenuation A. The amount of attenuation B was -21 dB. The acoustic insertion loss due to the presence of the PTFE membrane 101 was determined by subtracting the amount of attenuation A from the amount of attenuation B. A smaller insertion loss is a measure to determine that the volume of sound output from the speaker 140 is maintained better. This test employed steady-state response (SSR) analysis (test signals of 20 Hz to 10 kHz, sweep) as an evaluation technique. In this test, the acoustic evaluation apparatus automatically determined the insertion loss.

### (Example 1)

An amount of 100 parts by weight of a PTFE fine powder (650-J, manufactured by Du Pont-Mitsui Fluorochemicals Co., Ltd.) and 20 parts by weight of n-dodecane as a forming aid (manufactured by Japan Energy Corporation) were uniformly mixed. The resulting mixture was compressed with a cylinder and then ram-extruded into a sheet-shaped mixture. The resulting sheet-shaped mixture was rolled to a thickness of 0.16 mm by passing it between a pair of metal rolls and then heated at 150°C to dry and remove the forming aid. Thus, a sheet-shaped product of PTFE was obtained. Two such sheet-shaped products were stacked together. The resulting stack was stretched by a factor of 5 at a temperature of 260°C in the longitudinal direction (rolling direction). Thus, a porous PTFE membrane was obtained. Subsequently, this porous PTFE membrane was dipped in a liquid-repellent treatment solution for several seconds and then heated at 100°C to dry and remove the solvent. The oil-repellent treatment solution was prepared in the manner described hereinafter. First, 100 g of a compound having a linear fluoroalkyl group and represented by (Formula 1) shown below, 0.1 g of azobisisobutyronitrile as a polymerization initiator, and 300 g of a solvent (FS thinner manufactured by Shin-Etsu Chemical Co., Ltd.) were put in a flask fitted with a nitrogen introduction tube, a thermometer, and a stirrer. Nitrogen gas was then introduced into this flask. The contents in the flask were stirred to allow additional polymerization to proceed at 70°C for 16 hours to yield 80 g of a fluorine-containing polymer. This fluorine-containing polymer had a number-average molecular weight of 100,000. This fluorine-containing polymer was mixed with a diluent (FS thinner manufactured by Shin-Etsu Chemical Co., Ltd.) to prepare the liquid-repellent treatment solution having a concentration of the polymer of 3.0 mass%.

CH₂=CHCOOCH₂CH₂C₆F₁₃ (Formula 1)

Next, the porous PTFE membrane subjected to the liquid-repellent treatment was stretched by a factor of 30 at a temperature of 150°C in the transverse direction, and then wholly sintered at a temperature of 360°C which is higher than the melting point of PTFE (327°C).

Next, a pressure was applied to the porous PTFE membrane obtained by sintering in its thickness direction under the following pressure-application conditions: an application temperature of 100°C; an applied pressure of 5 MPa; and an application time of 10 seconds, using a heat press machine including an upper part having a pressing surface provided with recesses having an inner diameter of 6.0 µm and a depth of 1.1 µm. In this heat press machine, the ratio of the total opening area of the recesses in the upper part to the surface area of the pressing surface of the upper part was 30%. Thus, a PTFE membrane E1 having a high-density portion and low-density portions was obtained. In the top surface of the PTFE membrane E1, the ratio of the area of the high-density portion to the total area of the low-density portions was 70:30. The PTFE membrane E1 had a thickness of 7.1 µm.

The outer shape of the protrusion of the low-density portion is substantially the same as that of the recess in the upper part. That is, the outer diameter D of the protrusion of the low-density portion is substantially equal to the inner diameter of the recess in the upper part, and the height C of the protrusion of the low-density portion is substantially equal to the depth of the recess in the upper part. Thus, the outer diameter D of the protrusion of the low-density portion is about 6.0 µm, and the height C of the protrusion of the low-density portion is 1.1 µm. Furthermore, the measurement of the thickness of the PTFE membrane E1 using a micrometer is substantially equivalent to the measurement of the thickness A of the low-density portion. That is, the thickness A of the low-density portion is substantially equal to the thickness of the PTFE membrane E1. Thus, the thickness A of the low-density portion is 7.1 µm. On the other hand, the thickness B of the high-density portion is equal to a difference obtained by subtracting the height C of the protrusion of the low-density portion from the thickness A of the low-density portion. Thus, the thickness B of the high-density portion is 6.0 µm.

### (Comparative Example 1)

There was prepared an aqueous dispersion containing 40 weight% of an unsintered PTFE powder (the PTFE powder had an average particle diameter of 0.2 µm and the dispersion contained 6 parts by weight of a nonionic surfactant per 100 parts by weight of PTFE). To this aqueous dispersion was added 1 part by weight of a fluorine-based surfactant (MEGAFACE F-142D manufactured by DIC Corporation) per 100 parts by weight of PTFE. An elongated polyimide film (substrate) with a thickness of 125 µm was dipped in and withdrawn from the resulting dispersion. Next, the thickness of the coating of the dispersion applied to the substrate was adjusted to 13 mm with a metering bar. Subsequently, the dispersion (together with the substrate) was heated at 100°C for 1 minute to remove water by evaporation and then further heated at 390°C for 1 minute to bind the PTFE powder particles together. The same sequence of the dipping, coating, and heating was repeated three times in total. Thus, an imperforate PTFE membrane was formed on each of the two surfaces of the substrate. Next, the imperforate PTFE membrane was peeled from the substrate. Thus, a PTFE membrane C1 was obtained. The PTFE membrane C1 had a thickness of 14.0 µm.

### (Comparative Example 2)

An imperforate PTFE membrane was obtained in the same manner as in Comparative Example 1 except that the sequence of the dipping, coating, and heating was repeated twice in total with a metering bar. This imperforate PTFE membrane was used as a PTFE membrane C2. The PTFE membrane C2 had a thickness of 9.0 µm.

### (Comparative Example 3)

The porous PTFE membrane obtained by sintering in Example 1 was used as a PTFE membrane C3. The PTFE membrane C3 had a thickness of 20.0 µm.

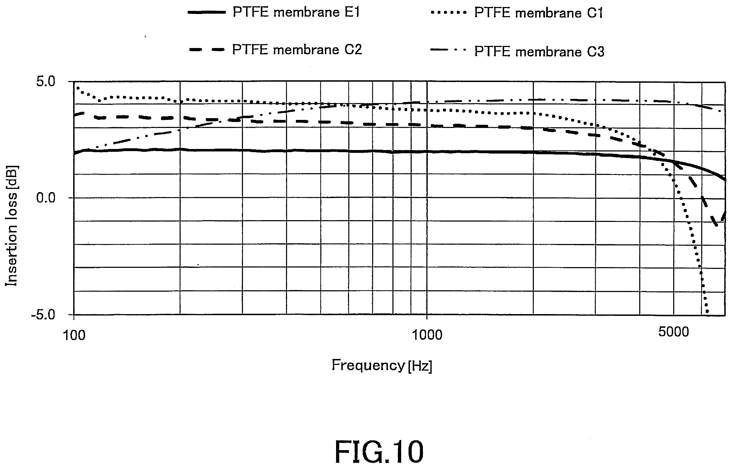

Table 1 shows the results of measurements of the average pore diameter, thickness, porosity, water entry pressure, gas permeability, and insertion loss for the PTFE membrane E1 and PTFE membranes C1 to C3. The values of the insertion loss in Table 1 are those measured using 1,000 Hz sound. FIG. 10 shows the relationship between the sound frequency and the insertion loss for the PTFE membranes.

**[Table 1]**

| | Average pore diameter [µm] | Thickness [µm] | Porosity [%] | Water entry pressure [kPa] | Gas permeability [sec/100 mL] | Insertion loss (1,000 Hz) [dB] |
|---|---|---|---|---|---|---|
| PTFE membrane E1 | 0.50 | 7.1 | 35.1 | 500 | 7.1 | 1.9 |
| PTFE membrane C1 | No pores | 14.0 | 0.0 | 650 | Not gas-permeable | 3.7 |
| PTFE membrane C2 | No pores | 9.0 | 0.0 | 600 | Not gas-permeable | 3.1 |
| PTFE membrane C3 | 0.50 | 20.0 | 92.0 | 400 | 3.0 | 4.1 |

A PTFE membrane was obtained in the same manner as in Example 1 except that a heat press machine including an upper part having a flat and smooth pressing surface was used. The gas permeability of this PTFE membrane was evaluated as being "not gas-permeable". This result proved that the high-density portion of the PTFE membrane E1 of Example 1 was "not gas-permeable".

As shown in FIG. 10, the PTFE membrane E1 had an insertion loss of 2.3 dB for 100 Hz sound, an insertion loss of 1.9 dB for 1,000 Hz sound, and an insertion loss of 1.6 dB for 5,000 Hz sound, which means that the insertion loss decreased as the frequency increased between 100 Hz and 5000 Hz. The PTFE membrane E1 had an insertion loss not more than 3 dB (more specifically not more than 2 dB) for 100 to 5,000 Hz sound. The results shown in Table 1 and FIG. 10 reveal that the PTFE membrane E1 had both good waterproofness and good sound permeability.

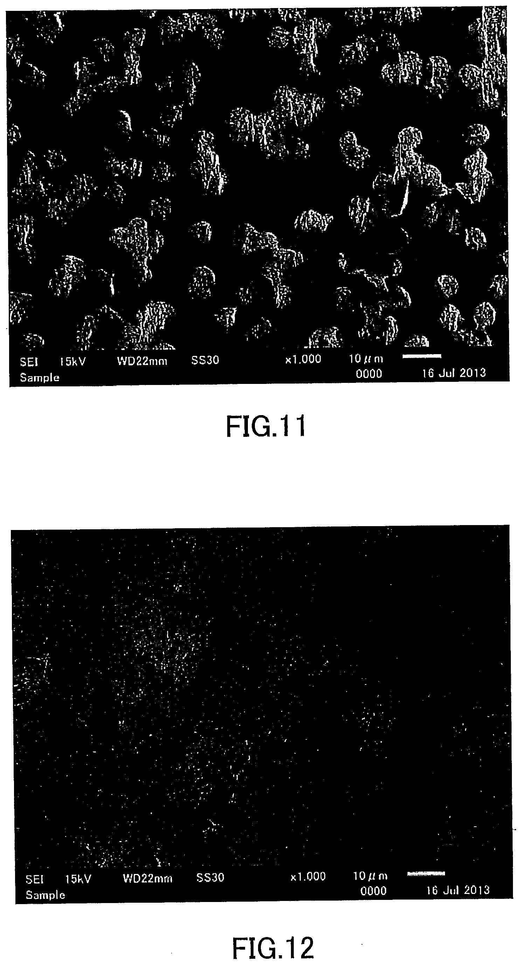

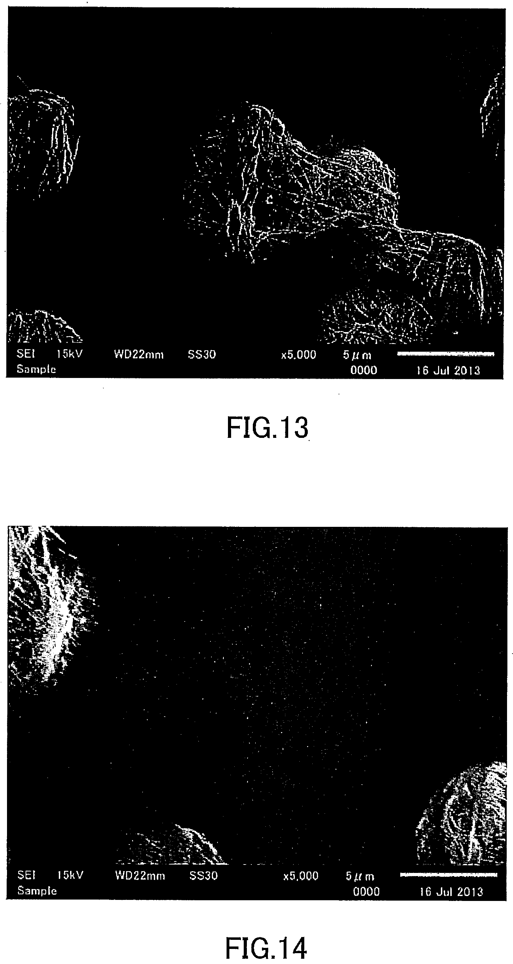

The top surface and under surface of the PTFE membrane E1 were observed with a SEM. FIG. 11 to FIG. 14 show the obtained SEM images. FIG. 11 is a SEM image of the top surface of the PTFE membrane, and FIG. 12 is a SEM image of the under surface of the PTFE membrane. The SEM images in FIG. 11 and FIG. 12 are those taken at a magnification of 1,000. FIG. 13 is an enlarged SEM image of a region including a low-density portion in the top surface of the PTFE membrane, and FIG. 14 is an enlarged SEM image of a region including a high-density portion in the top surface of the PTFE membrane. The SEM images in FIG. 13 and FIG. 14 are those taken at a magnification of 5,000. As shown in FIG. 12, in the under surface of the PTFE membrane E1, the boundaries between the low-density portions and the high-density portion are poorly defined. In the top surface of the PTFE membrane E1, however, the low-density portions and the high-density portion were clearly identified.

### INDUSTRIAL APPLICABILITY

The waterproof sound-permeable membrane of the present invention is highly useful in implementing waterproof sound-permeable structures of electronic devices containing acoustic devices, such as mobile phones, laptop computers, smartphones, portable audio players, and portable game machines.

## Claims

1. A method for producing a waterproof sound-permeable membrane including a polytetrafluoroethylene membrane, the method comprising:
stretching a polytetrafluoroethylene sheet so as to obtain a porous polytetrafluoroethylene membrane having a porous structure including a plurality of fibrils and pores between the plurality of fibrils; and
applying a pressure to only a region of one principal surface of the porous polytetrafluoroethylene membrane in a thickness direction of the porous polytetrafluoroethylene membrane or applying a greater pressure to a region of one principal surface of the porous polytetrafluoroethylene membrane than to a remaining region of the one principal surface other than the region to which the greater pressure is applied, in the thickness direction of the porous polytetrafluoroethylene membrane, so as to form a polytetrafluoroethylene membrane including a low-density portion having the porous structure and a high-density portion having a lower porosity than the low-density portion.

2. The method for producing a waterproof sound-permeable membrane according to claim 1, wherein the pressure is applied to the porous polytetrafluoroethylene membrane in such a manner that the low-density portions are formed separately from one another within the high-density portion.

3. The method for producing a waterproof sound-permeable membrane according to claim 1, wherein the pressure is applied to the porous polytetrafluoroethylene membrane with a pressing member having a pressing surface by pressing the pressing surface against the one principal surface of the porous polytetrafluoroethylene membrane, the pressing surface including a flat reference surface and a plurality of depressed portions formed within the reference surface.

4. The method for producing a waterproof sound-permeable membrane according to claim 1, wherein in the one principal surface, a ratio of an area of the high-density portion to an area of the low-density portions is 40:60 to 99:1.

5. A waterproof sound-permeable membrane comprising a polytetrafluoroethylene membrane, wherein
the polytetrafluoroethylene membrane comprises:
a low-density portion having a plurality of fibrils and pores between the plurality of fibrils and exposed on one principal surface of the polytetrafluoroethylene membrane; and
a high-density portion having a lower porosity than the low-density portion and exposed on the one principal surface.

6. The waterproof sound-permeable membrane according to claim 5, wherein the polytetrafluoroethylene membrane has gas permeability between the one principal surface and the other principal surface opposite to the one principal surface.

7. The waterproof sound-permeable membrane according to claim 5, wherein the polytetrafluoroethylene membrane is thicker in the low-density portion than in the high-density portion.

8. The waterproof sound-permeable membrane according to claim 5, wherein the low-density portions are formed separately from one another within the high-density portion.

9. The waterproof sound-permeable membrane according to claim 5, wherein in the one principal surface, a ratio of an area of the high-density portion to an area of the low-density portions is 40:60 to 99:1.

10. An electronic device comprising:
a sound emitting part and/or a sound receiving part;
a housing containing the sound emitting part and/or the sound receiving part and provided with an opening for directing sound from the sound emitting part and/or directing sound to the sound receiving part; and
the waterproof sound-permeable membrane according to claim 5, the waterproof sound-permeable membrane being joined to the housing so as to cover the opening.
